# EUROPEAN PATENT APPLICATION

(11) **EP 3 184 159 A1**
(43) Date of publication of application: **28.06.2017**
(21) Application number: 15202462.6
(22) Date of filing: 23.12.2015
(51) Int. Cl.: B01D 35/027, B01D 29/01, B01D 29/11, B01D 29/56, F02M 37/00, F02M 37/22

(54) **FILTERING SYSTEM FOR FLUID SENSORS ESPECIALLY FOR FUEL TANKS AND SENSOR SYSTEMS COMPRISING SAME**

(71) Applicant: Wema System AS, 5258 Blomsterdalen (NO)
(72) Inventor: ELIASSEN, Bengt, 5236 Raadal (NO); GROZEA, Ion, 5254 Sandsli (NO); STAN, Daniel George, 5258 Blomsterdalen (NO)
(74) Representative: Grünecker Patent- und Rechtsanwälte PartG mbB

(57) **Abstract**

The invention relates to a sensor system with at least one fluid sensor (7) and at least one suction tube (9) with an inlet port (11) for the fluid, the sensor system basically extends along a longitudinal axis, the system has at least one lower bracket (3) to fix the fluid sensor (7) and the inlet port (11) of the suction tube (9), and the system has a first filter (25) that is mounted into the suction tube (9) for the fluid and at least a second filter (21) in front of the inlet port of the suction tube (9) that is mounted to the lower bracket (3).

## Description

The invention relates to a filtering system for a fluid sensor of a sensor system, in particular a fuel sensor system. The invention further relates to sensor systems for fluid systems, in particular for a fuel tank.

Fluid sensors and sensor systems are known in the prior art. Fluid sensors can be adapted for measuring quantities such as fluid levels, compound concentrations or purity. In many applications it is necessary to filter the fluid before use. A filtration is especially useful if done in the tank. One of the problems seen in fluid tanks is the clogging of the filters.

Fuel filtering systems are known from US20150021246; US8696894; US5458767; US6514404; US7485219; US8696894. CN202140212 discloses having a plurality of filters; CN103486095 discloses a three stage filtration system for an oil pump test fuel tank.

It is an object of the invention to provide a filtering solution for a fluid sensor, especially for fuel liquids, which decreases the probability of clogging and extends the lifetime of the mechanical systems.

For the filtering system for fluid sensors as mentioned above, this object is achieved in that a first filter is used for mounting into the suction tube of the fluid and at least one second filter is provided for mounting in the fluid direction in front of the inlet port of the suction tube.

For a sensor system as mentioned above, the object is achieved by a system comprising at least one fluid sensor and at least one suction tube with an inlet port for the fluid, wherein the system further comprises a first filter that is mounted into the suction tube for the fluid and at least a second filter in front of the inlet port of the suction tube according to the invention.

For another sensor system as mentioned above, the object is achieved by a system comprising at least one fluid sensor and at least one suction tube with an inlet port for the fluid, wherein the sensor system basically extends along a longitudinal axis, wherein the system further comprises at least one lower bracket to fix the sensor and an inlet port of the suction tube, and wherein the system further comprises a first filter that is mounted into the suction tube for the fluid and at least a second filter in front of the inlet port of the suction tube that is mounted to the lower bracket.

This solution according to the invention allows for a reduction of the clogging probability of the filters with using a combination different filter. Advantageously the filters can be replaced. Also advantageously a third filter can be applied between the first and second filters.

By applying a two or three step replaceable filter strategy the advantage is that one can use the mechanical fuel sensor main structure for a longer time by adding a service interval for filter cleaning or filter replacement.

In the following, further improvements of the invention are described. The additional improvements may be combined independently of each other, depending on whether a particular advantage of a particular improvement is needed in a specific application.

According to a first advantageous improvement, the first filter is in a shape of a sock that is applied inside the suction tube and fixed to the inlet port of the suction tube. The first filter is made of a tubular filter mesh that is closed at one end and is supported by a fixing tube at that other end, the fixing tube accommodated to fix it to the inlet port of the suction tube. The tubular mesh is placed inside the suction tube. The mesh of the first filter is made to filter particles that are larger than 300 micron.

The second filter is arranged in front of the inlet port of the suction tube. It is a 500-700 micron mesh and is carried by a frame. It can be made of plastic and most advantageously as one part. The frame can be clipped with fixing clips to a lower bracket of the sensor that is holding the suction tube and sensor.

A third filter can be arranged between the second and first filters. The mesh of that filter should be less than 400 micron.

Most advantageously the second filter has arranged stand offs to fix the first liter inside the frame of the second filter and in the fluid flow direction in front of the first filter.

Each of the filters can advantageously be replaced and cleaned.

In an operating position of the sensor system, the longitudinal axis of the sensor system may basically extend along a gravitational direction, in particular with the lower bracket pointing in the gravitational direction.

For connecting the sensor system to a fluid tank, the sensor system may comprise a flange for connecting the sensor system to the fluid tank. The sensor system and the filtering system may together form a unit which can be inserted into a fluid tank and which can be mounted with said flange to the surrounding of an opening in the fluid tank. The flange has added a housing for electronics to it and includes an electrical connector for connection with that electronics as wel as fluid connectors to connect to the suction tube.

In the following, the invention and its improvements are described in greater details using exemplary embodiments and with reference to the figures. As described above, the various features shown in the embodiments may be used independently of each other in specific applications.

In the following figures, elements having the same function and/or the same structure will be referenced by the same reference signs.

In the drawings:
- Fig. 1: shows a first embodiment of a sensor system according to the invention in an assembled state in a perspective view;
- Fig. 2: shows the embodiment of Fig. 1 in a different view from the bottom on the second filter;
- Fig. 3: shows the embodiment of Fig. 1 in a view from the bottom with the second filter taken of on the first filter;
- Fig. 4: shows an exploded view with the bracket and first and second filters;
- Fig. 5: shows a second embodiment in an exploded view with the bracket and first and second and third filters;
- Fig. 6: shows the second embodiment in a closer exploded view with the bracket and first and second and third filters, the first filter partly inserted into the suction tube.

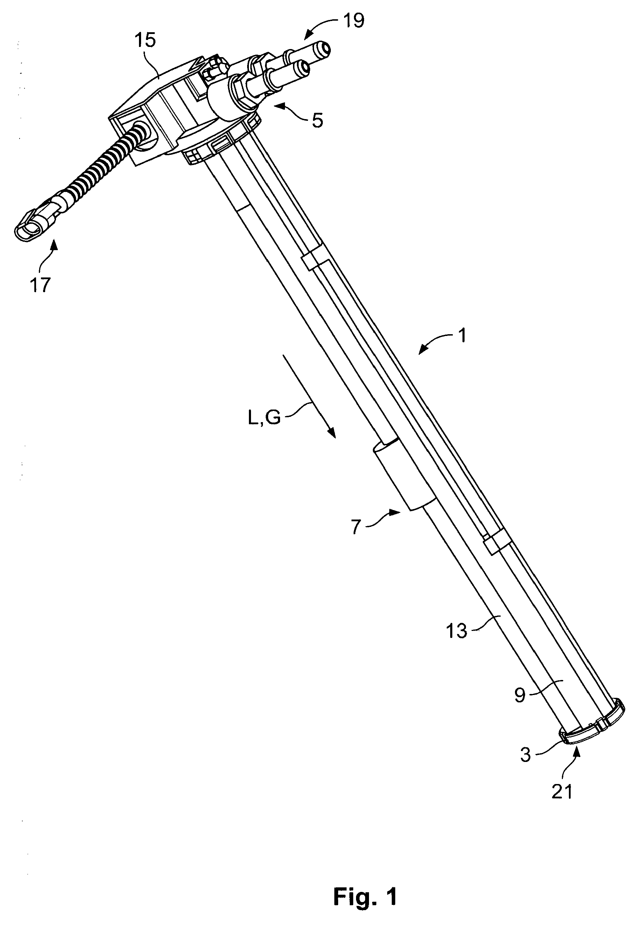

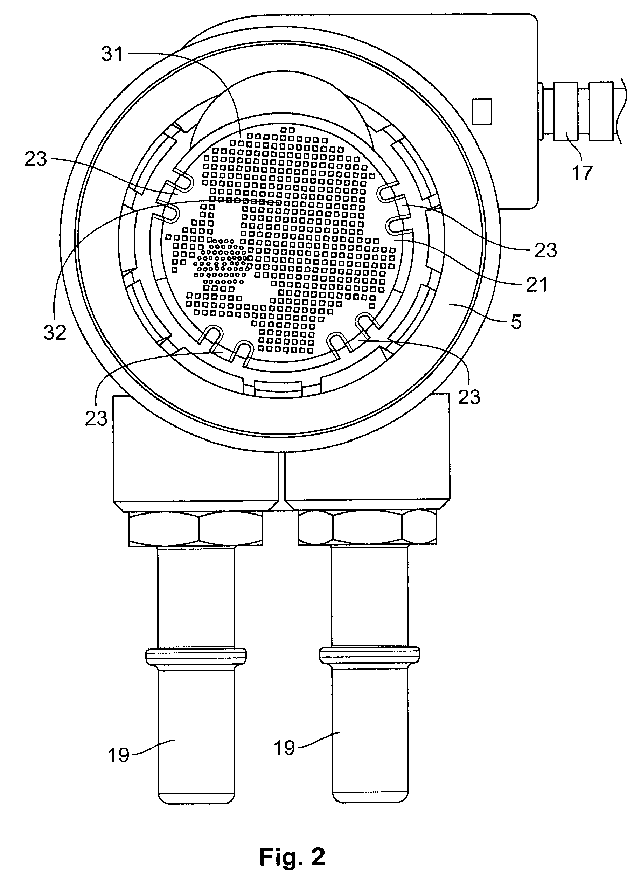

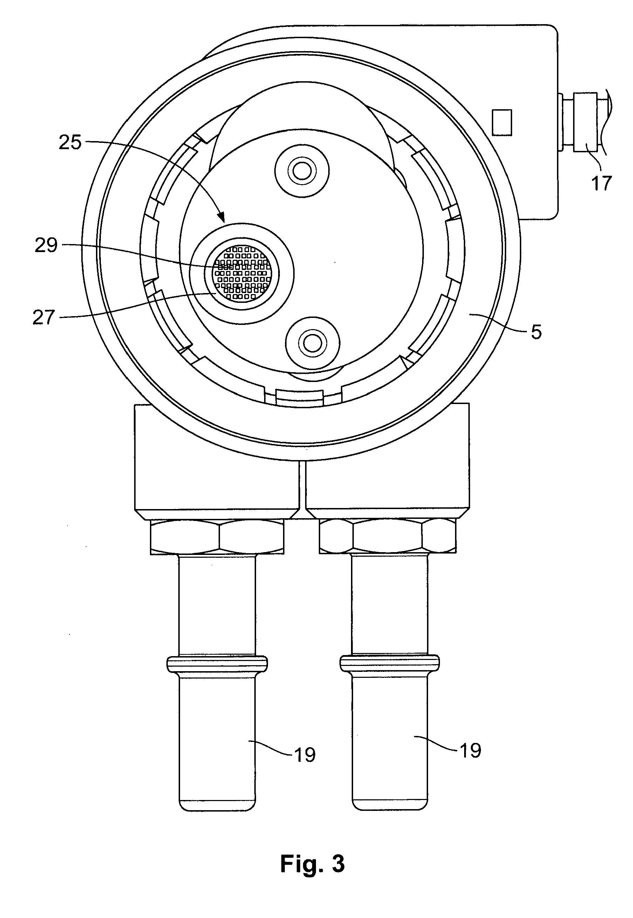

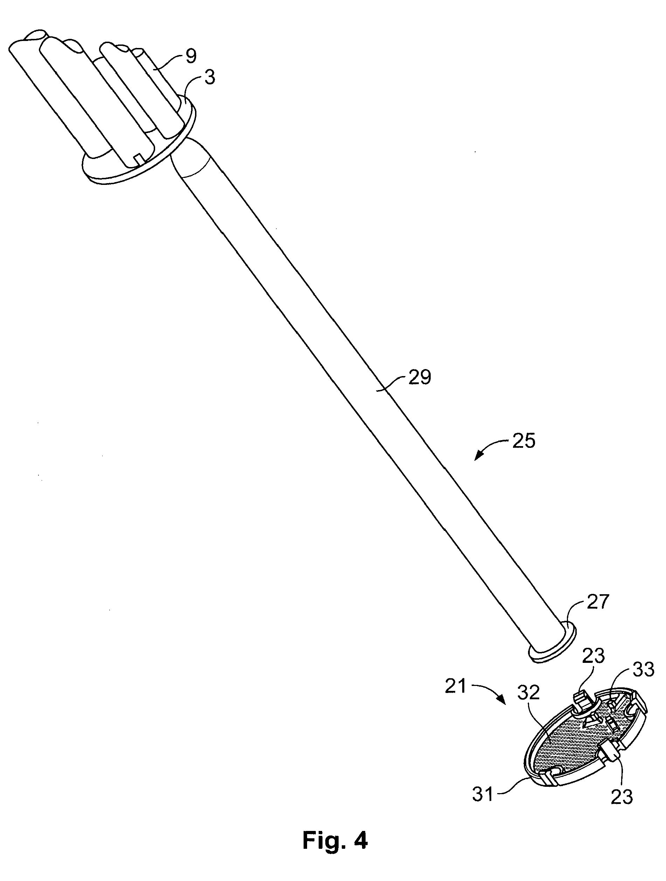

In the following, a first advantageous embodiment of a sensor system 1 and filtering system according to the invention is described with reference to Figs. 1 to 4. In the Figures, a complete sensor system 1 consists of a sensor system 1 and a filtering system according to the invention.

The sensor system 1 comprises a flange 5 for connecting the sensor system 1 to a fluid tank. The flange 5 may also form a header for the sensor system 1 providing inlet and outlet posts for a fluid, so called fluid connectors 19 and other conduits which may be necessary for the sensor system. The flange may also carry some electronics of the sensor system 1 in an electronics housing 15. For connection with the electronics an electrical connector 17 is fixed to the housing for the electronics 15 and electronics. The sensor system 1 extends along a longitudinal axis L, longitudinally from the flange 5 towards a distal end that is formed by a lower bracket 3. A suction tube 9 may extend from the flange 5 to the lower bracket 3, preferably in parallel with the longitudinal axis L. An inlet port 11 of the suction tube forms the end of the suction tube 9 and preferably is fixed in the lower bracket 3.

In an operating position, for example shown in Figure 1, the longitudinal axis L of the sensor system 1 basically extends along a gravitational direction G.

The sensor system 1 further comprises at least one fluid sensor 7, which is preferably provided on a sensor rod 13. The at least one fluid sensor 7 may be adapted for measuring the level of a fluid, the temperature, the concentration of a certain compound and/or other quantities.

Finally, the sensor system 1 comprises a filter system which is arranged at the lower bracket 3 of the system. The filter system is connected to the inlet port 11 of the suction tube 9 and the lower bracket 3.

The filter system comprises a first and a second filter 25, 21.

The second filter 21 is made of plastic and consists of a mesh (700 micron mesh size) and a frame. The frame 31 has several fixing clips 23 fixed to the outer rim for fixing the frame 31 and with it the second filter to the lower bracket 3.

In addition to the second filter 21 the filtering system includes a first filter 25. The first filter 25 is made of a tubular filter mesh 29 that is closed at one end. The other end of the tubular mesh 29 is connected to a fixing tube 27. The mesh has a mesh size of 300 micron.

The second filter 21 is fixed with the fixing tube 27 to the inlet port 11 of the suction tube 9. The tubular filter mesh 29 is arranged inside the suction tube 9.

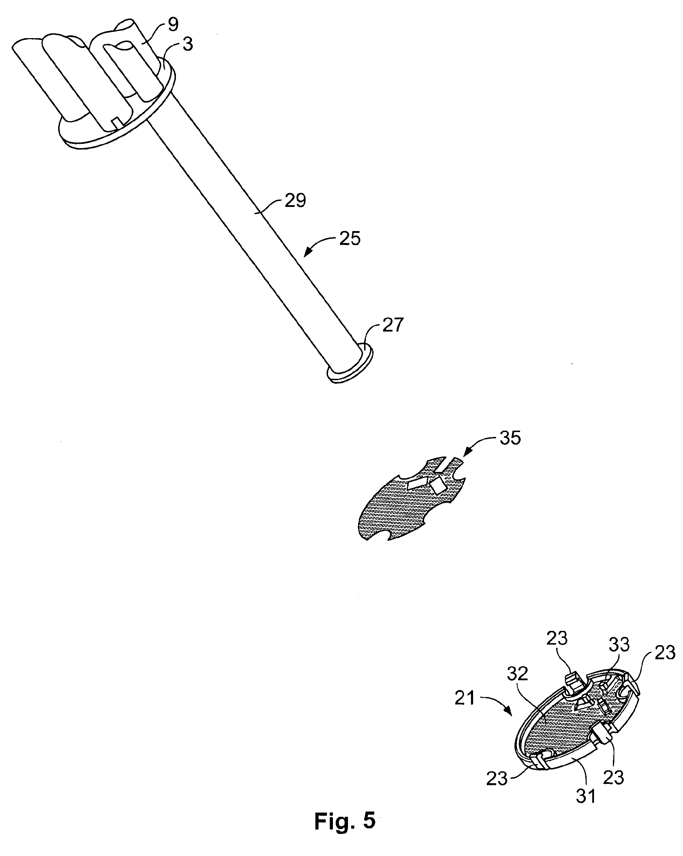

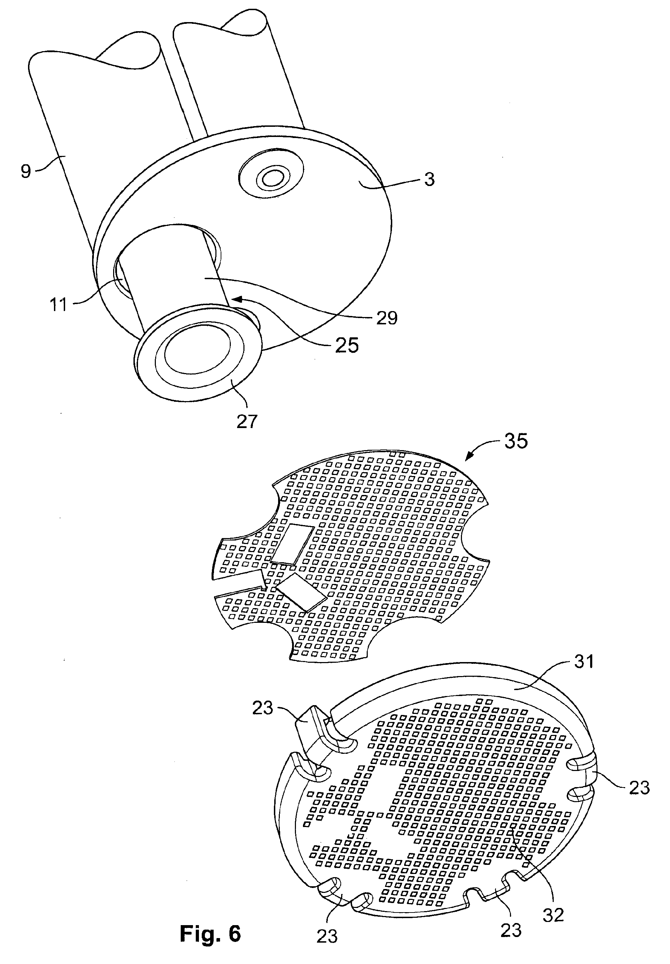

In the following, a second preferred embodiment of the invention is described with respect to Figures 5 and 6. For the sake of brevity, only the differences to the first embodiment are mentioned.

In contrast to the first embodiment, the second embodiment provides in addition a third filter 31 that is arranged between the first and second filters 21, 25. The second filter 21 is carrying stand offs 33 to fix the third filter 35 between the first and second filters 21, 25.

The third filter 31 has a mesh size between the sizes of the first and second filters e.g. 400 micron.

### REFERENCE SIGNS

- 1: sensor system
- 3: lower bracket
- 5: flange
- 7: fluid sensor
- 9: suction tube
- 11: inlet port
- 13: sensor rod
- 15: housing for electronics
- 17: electrical connector
- 19: fluid connectors
- 21: second filter
- 23: fixing clip
- 25: first filter
- 27: fixing tube
- 29: tubular filter mesh
- 31: frame
- 32: second mesh
- 33: stand offs to fix third filter
- 35: third filter

- G: gravitational direction
- L: Longitudinal axis

## Claims

1. Filtering system for a fluid sensor (7) of a sensor system (1), in particular a fuel sensor system, the filtering system including a first filter (25) for mounting into the suction tube (9) of the fluid sensor and at least one second filter (21) for mounting in fluid direction in front of an inlet port (11) of the suction tube (9).

2. Filtering system according to claim 1, wherein the first filter (25) is made of a mesh with 300 micron or less mesh size.

3. Filtering system according to one of the claims 1 or 2, wherein the first filter (25) is made of a tubular filter mesh (29), that is closed at one end.

4. Filtering system according to one of the claim 3, wherein the tubular filter mesh (29) of the first filter (25) is supported at the non-closed end by a fixing tube (27).

5. Filtering system according to one of the claims 1 to 4, wherein the first filter (25) is fixed to the inlet port (11) of the suction tube (9) with the fixing tube (27) and that the tubular filter mesh (29) extends into the suction tube (9).

6. Filtering system according to one of the claims 1 to 5, wherein the second filter (21) is made of a mesh of 500-700 micron mesh size.

7. Filtering system according to one of the claims 1 to 6, wherein the second filter (21) is made of a frame (31) and a second mesh (32).

8. Filtering system according to claim 7, wherein the second filter (21) is made of plastic and the frame and second mesh are made as one part.

9. Filtering system according to one of the claims 1 to 8, wherein a third filter (35) is arranged between the first and second filter (21, 25).

10. Sensor system comprising at least one fluid sensor (7) and at least one suction tube (9) with an inlet port (11) for the fluid, wherein the sensor system basically extends along a longitudinal axis, wherein the system further comprises at least one lower bracket (3) to fix the fluid sensor (7) and the inlet port (11) of the suction tube (9), and wherein the system further comprises a first filter (25) that is mounted into the suction tube (9) for the fluid and at least a second filter (21) in front of the inlet port of the suction tube (9) that is mounted to the lower bracket (3).

11. Sensor system according to claim 10, wherein the system has a flange (5) to mount it in a fuel tank.

12. Sensor system according to one of the claim 10 or 11, wherein a third filter (35) is arranged between the first and second filter (21, 25).

13. Sensor system according to claim 12, wherein the third filter (35) has a mesh size of 400 micron.

14. Sensor system according to one of the claims 10 to 13, wherein all filters are replaceable.
